# FASCICULE DE BREVET EUROPEEN

(11) **EP 2 682 356 B1**
(45) Date de publication et mention de la délivrance du brevet: **01.04.2015**
(21) Numéro de dépôt: 13305963.4
(22) Date de dépôt: 05.07.2013
(51) Int. Cl.: B65G 21/20, B65G 27/04, B65G 47/14, B65G 47/68

(54) **Réglette multiformat vibrante pour convoyage et distribution de pièces orientées, installation avec réglette**
Schwingende Multiformat-Leiste zum Fördern und Verteilen von ausgerichteten Teilen, Anlage mit Leiste
Vibrating multi-format strip for conveying and distributing oriented parts, facility with such strip

(30) Priorité: 05.07.2012 FR 1256470
(43) Date de publication de la demande: 08.01.2014
(73) Titulaire: PKB, 27930 Angerville-La-Campagne (FR)
(72) Inventeur: Marault, Jean Michel, 94240 L'HAY LES ROSES (FR); Guyard, Christophe, 75007 PARIS (FR)
(74) Mandataire: Coralis Harle

(56) Documents cités:
- EP-A1- 2 001 275
- EP-A1- 2 072 426
- US-A- 4 206 539
- US-A- 5 913 428
- US-A- 6 105 753
- US-A1- 2006 096 839

## Description

La présente invention concerne une réglette multiformat vibrante pour convoyage et distribution de pièces orientées ainsi qu'une installation comportant une telle réglette. Elle a des applications dans le domaine de l'embouteillage ou du flaconnage dans lesquels des pièces du type pompes avec pulvérisateurs, bouchons ou autres accessoires doivent être installés sur des contenants.

On connaît déjà des dispositifs de triage et d'orientation tels que les bols vibrants pour des pièces asymétriques ayant un centre de gravité décalé sur leur longueur comme des pompes avec pulvérisateurs. On peut par exemple se référer à la demande de brevet FR06/50658 qui concerne un tel bol vibrant à sortie droite. Les pièces alignées et orientées qui sortent du bol vibrant sont distribuées en file(s) et sont destinés à être pris en charge par une unité d'aval qui comporte des moyens d'entraînement propres desdites pièces. Cette unité aval est notamment une réglette destinée à convoyer les pièces vers une machine d'aval dans laquelle elles seront utilisées. Cette réglette, en général vibrante, convoie les pièces qui sont orientées verticalement. Or les pièces en sortie du bol vibrant sont généralement inclinées par rapport à la verticale et il est donc nécessaire de procéder à un changement d'orientation des pièces entre la sortie du bol vibrant et la réglette. Dans la demande FR06/50658, ce changement d'orientation est obtenu par une vrille de direction générale dans l'axe de sortie du bol et dont l'orientation de guidage des pièces passe progressivement lors de leur déplacement de l'inclinaison de sortie de bol à la verticale à l'entrée de la réglette. Dans la demande, FR07/60219, ce changement d'orientation est obtenu par une crosse dans laquelle tombent les pièces en sortie du bol.

On connait également des dispositifs de ce type par les documents US5913428, US6105753, US4206539, EP2001275 et US2006/096839.

Les pièces à distribuer sont de formes et types divers en fonction des productions à réaliser. Il est donc souhaitable de disposer d'appareillages relativement polyvalents, dits multiformat, qui puissent être utilisés dans des conditions diverses à la fois pour diminuer les coûts et pour réduire les temps de changements de formats.

L'invention concerne plus particulièrement une réglette qui sert à convoyer et distribuer selon une orientation définie des pièces vers une machine d'aval dans laquelle elles seront utilisées.

Ainsi, l'invention concerne une réglette multiformat pour convoyage et distribution de pièces orientées pour flacons, lesdites pièces étant guidées et maintenues dans une orientation prédéfinie entre deux parois latérales dans la réglette par au moins un guide et un toit de ladite réglette, le guide étant formé de deux lames parallèles allongées dans le sens de la longueur de la réglette, chacune des lames étant solidaire d'une paroi latérale correspondante, le guide soutenant les pièces et le toit formant une limite vers le haut aux déplacements/trépidations des pièces.

Selon l'invention, le guide et le toit sont parallèles entre eux et la distance, c'est-à-dire l'écart, entre le guide et le toit est réglable par un moyen de réglage de hauteur de toit, et une des parois latérales est amovible et interchangeable pour permettre une adaptation du guide, ou changement de type de guide, en fonction du type de pièce.

Dans divers modes de mise en oeuvre de l'invention de procédé, les moyens suivants pouvant être utilisés seuls ou selon toutes les combinaisons techniquement possibles, sont employés :
- la réglette est rendue vibrante,
- les pièces sont notamment des pompes ou des bouchons de flacons,
- dans un premier type de guide, la largeur de la lame de la paroi amovible est telle que le guide est formé de deux lames parallèles séparées par une ouverture,
- le premier type de guide est plus particulièrement destiné à des pièces comportant une partie supérieure élargie reposant sur le guide et se poursuivant par une partie inférieure allongée passant par l'ouverture comme par exemple la tigelle ou tube d'aspiration d'une pompe,
- dans un second type de guide, la largeur de la lame de la paroi amovible est telle que le guide est formé de deux lames parallèles accolées entre elles,
- le second type de guide est plus particulièrement destiné à des pièces comportant une partie élargie reposant sur le guide et ne se poursuivant pas vers le bas comme par exemple un bouchon,
- le toit comporte deux parties allongées sur la longueur de la réglette, parallèles entre elles, et pouvant être accolées ou séparées entre elles afin de former respectivement un toit continu ou un toit comportant un canal ouvert vers le haut en bas du toit et allongé sur la longueur dudit toit,
- le canal du toit ouvert forme un moyen de guidage pour des pièces comportant une partie d'extrémité supérieure rétrécie par rapport à une partie plus basse élargie reposant sur le guide,
- la réglette comporte un moyen de réglage en ouverture et fermeture du canal du toit,
- le canal du toit en configuration ouverte est destiné à des pièces comportant une partie d'extrémité supérieure rétrécie par rapport à une partie plus basse élargie reposant sur le guide et bloquée en hauteur de trépidation par le toit, l'extrémité supérieure rétrécie pouvant circuler dans le canal, comme par exemple le « stem » ou tube de refoulement d'une pompe ne comportant pas de bouton poussoir manuel sur son extrémité supérieure,
- la réglette comporte une trappe de vidange, ladite trappe comportant une partie amovible du guide,
- la partie amovible du guide est un segment amovible de lame du coté de la paroi latérale qui est amovible,
- la partie amovible du guide est un segment amovible de lame du coté de la paroi latérale qui n'est pas amovible,
- la réglette est supportée en hauteur par au moins un bras, ledit bras étant vibrant, et qu'elle comporte a son extrémité amont, coté arrivée des pièces, un moyen de fixation à une crosse de récupération et redressement des pièces,
- la réglette comporte une paroi latérale fixe, une paroi latérale amovible et interchangeable, la paroi latérale fixe étant fixée à un couvercle fermant vers le haut la réglette, les moyens de réglage de hauteur de toit étant fixés sur le couvercle tout comme l'éventuel moyen de réglage en ouverture et fermeture du canal du toit, des moyens de fixation amovible à la paroi latérale amovible étant installés sur ledit couvercle,
- les moyens de réglage de hauteur de toit sont à réglage continu, au moins un axe fileté retenant le toit par le haut et traversant le couvercle pouvant être monté ou descendu par vissage ou dévissage dudit axe fileté par rapport au couvercle,
- les moyens de réglage de hauteur de toit sont à réglage discontinu indexé, au moins un axe retenant le toit par le haut et traversant le couvercle pouvant être monté ou descendu par sélection en rotation d'une came d'un ensemble de cames de hauteurs différentes montées sur un barillet rotatif solidaire de l'axe, la came sélectionnée prenant un appui fixe en relation avec le couvercle,
- chacune des cames sélectionnable du barillet est réglable en hauteur,
- la hauteur réglée des cames du barillet est rendue fixe par un moyen d'immobilisation,
- les cames sont des tiges filetées pouvant être vissées ou dévissées à travers le barillet pour réglage en hauteur,
- la réglette comporte en outre coté extrémité aval, un embout destiné à prolonger le convoyage et la distribution des pièces orientées vers l'aval,
- l'embout est une pièce rapportée et fixée sur l'extrémité aval de la réglette,
- l'embout est interchangeable et adapté aux pièces à distribuer qui sont de formes et types divers en fonction des productions à réaliser,
- l'embout comporte des moyens permettant de conserver ou de décaler l'axe de délivrance en aval des pièces distribuées afin d'optimiser l'implantation d'un ensemble de distribution comportant la réglette,
- l'embout est de conception semblable à celle de la réglette,
- l'embout ne comporte pas de toit propre, le toit au niveau de l'embout provenant d'un allongement aval du toit de la réglette,
- la réglette comporte intégrée une partie des éléments de la crosse,
- les éléments de la crosse permettant un changement de format ou de type de pièce sont rapportés et fixés sur l'extrémité amont de la réglette.

L'invention concerne également une installation de distribution de pièces orientées telle qu'elle comporte d'amont vers l'aval selon le sens de circulation des pièces, un bol vibrant, un moyen de récupération et redressement des pièces et la réglette décrite, le moyen de récupération et redressement étant fixé à une extrémité amont de la réglette et étant disposé en sortie dudit bol vibrant.

L'invention concerne enfin une installation de distribution de pièces orientées telle qu'elle comporte d'amont vers l'aval selon le sens de circulation des pièces, un bol vibrant à sortie droite, une crosse de récupération et redressement des pièces et la réglette décrite, la crosse étant fixée à une extrémité amont de la réglette et étant disposée en sortie dudit bol vibrant.

Grâce à l'invention, on dispose d'une réglette pour convoyage et distribution de pièces orientés polyvalente et qui est rapidement et simplement adaptable à chaque type/format de pièces à transporter. Une seule réglette adaptable/polyvalente est donc mise en oeuvre au lieu d'autant de réglettes qu'il y a de types/formats de pièces à convoyer et distribuer. Cette même réglette permet le convoyage de pompes et de bouchons selon son réglage. La réglette de l'invention peut même s'adapter à des nouveaux types/formats de pièces. La présente invention va maintenant être exemplifiée sans pour autant en être limitée avec la description qui suit en relation avec les figures suivantes:
la Figure 1 qui représente une installation de distribution de pièces orientées vue en perspective et comportant une réglette selon l'invention,
la Figure 2 qui représente une vue latérale de la réglette, coté paroi latérale fixe, la paroi latérale amovible ayant été retirée,
la Figure 3 qui est une vue de dessus de la réglette, la paroi latérale amovible ayant été retirée,
la Figure 4 qui est une vue en perspective de la réglette, coté paroi latérale amovible,
cette dernière ayant été retirée,
la Figure 5.1 qui est une vue en perspective d'une paroi latérale amovible pour pompe,
la Figure 5.2 qui est une vue en perspective d'une paroi latérale amovible pour bouchon,
la Figure 6. qui est une vue en perspective en éclaté d'une paroi latérale amovible pour pompe,
la Figure 7 qui est une vue en perspective en éclaté de la réglette, la paroi latérale amovible ayant été omise dans cette vue,
la Figure 8 qui est une vue partielle d'un moyen de réglage de hauteur de toit à réglage discontinu indexé détaillant le barillet d'indexation,
la Figure 9.1 qui représente une vue selon l'axe longitudinal de la réglette coté aval de ladite réglette avec une paroi latérale amovible pour bouchon et un bouchon convoyé,
la Figure 9.2 qui représente une vue selon l'axe longitudinal de la réglette coté aval de ladite réglette avec une paroi latérale amovible pour pompe avec poussoir de tête/bouton poussoir/bouton diffuseur et une telle pompe convoyée,
la Figure 9.3 qui représente une vue selon l'axe longitudinal de la réglette coté aval de ladite réglette sans paroi latérale amovible,
la Figure 9.4 qui représente une vue selon l'axe longitudinal de la réglette coté aval de ladite réglette avec une paroi latérale amovible pour pompe sans poussoir de tête/bouton poussoir/bouton diffuseur et une telle pompe convoyée, et
la Figure 10 qui représente quelques exemples d'articles pouvant être convoyés/distribués par la réglette.

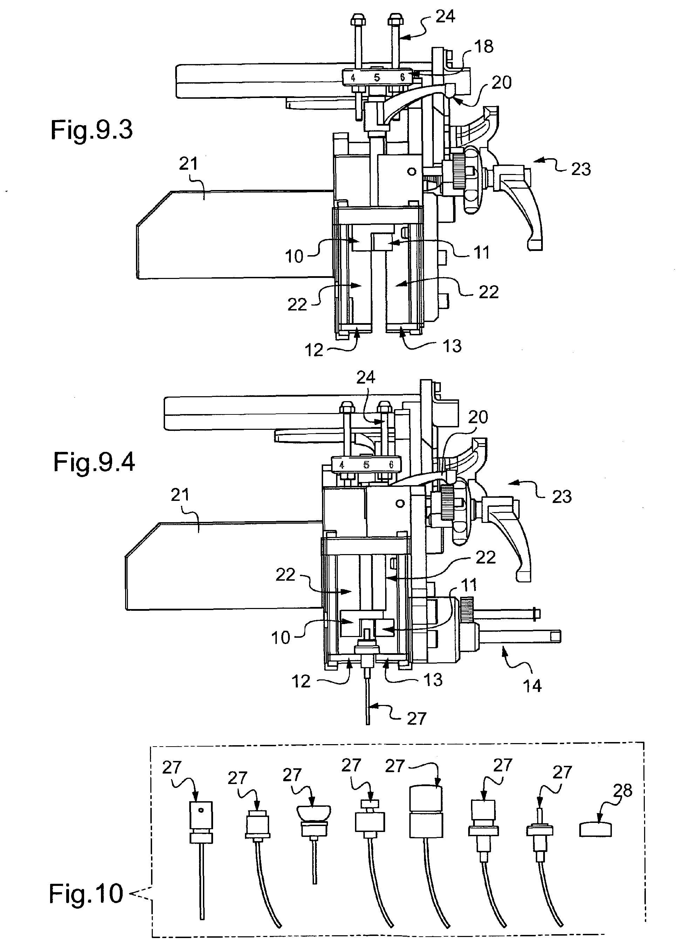

On va maintenant décrire un exemple de réalisation d'une réglette multiformat selon l'invention en la replaçant tout d'abord dans son contexte d"utilisation. Cette réglette comporte des éléments de crosse intégrés mais dans d'autres modalités de réalisation, la crosse est un élément complètement rapporté sur l'extrémité amont de la réglette. Les pièces orientées convoyées/distribuées par la réglette sont typiquement des pompes 27 avec ou sans poussoir de tête/bouton poussoir/bouton diffuseur ou des bouchons 28. Ces pompes 27 et bouchons 28 sont de tailles et de formes diverses comme représenté sur la Figure 10.

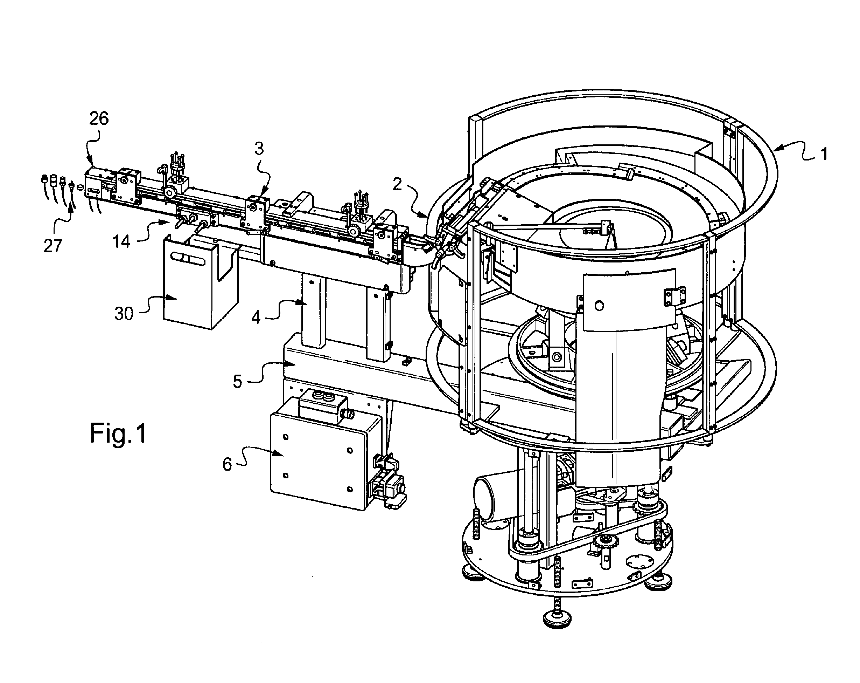

Sur la Figure 1, l'installation de distribution de pièces orientées comporte d'amont en aval, un bol vibrant 1 à sortie droite qui n'est pas détaillé ici. En sortie de ce bol 1, une crosse 2, récupère les pièces qui tombent dans cette crosse pour finir orientées verticalement à l'entrée amont de la réglette 3. La crosse 2 est fixée à l'extrémité amont de la réglette 3. La réglette 3 comporte en outre, coté extrémité aval, un embout 26 destiné à prolonger le convoyage et la distribution des pièces orientées vers l'aval. Cet embout 26 est une pièce rapportée et fixée sur l'extrémité aval de la réglette. L'embout peut être droit comme représenté ou être incliné/courbé dans une direction particulière. L'embout peut être plus ou moins long en fonction des besoins. L'embout sert d'interface de transfert des pièces entre la réglette et une machine ou un équipement aval devant recevoir les pièces pour les utiliser. On a représenté à titre informatif sur la Figure 1, en sortie de la réglette, divers types/formats de pièces qui sont dans cet exemple des pompes 27 pouvant être convoyées/distribuées moyennant un réglage de la réglette à chaque type/format de pièce. Des bouchons 28 peuvent également être convoyés/distribués par la réglette.

La réglette 3 est montée vibrante sur des bras supports 4 solidaires d'une poutre 5 commune au bol vibrant 1 afin d'avoir une relation physique adéquate entre le bol vibrant, d'une part, et la crosse solidaire de la réglette, d'autre part.

Des moyens électroniques 6 permettent notamment de contrôler le fonctionnement, en particulier les vibrations, de la réglette et donc de la crosse. Du fait de ces vibrations, les pièces qui sont tombées dans la crosse passent dans la réglette et s'y déplacent vers l'aval en sortie de la réglette tout en subissant des trépidations. Afin d'éviter que ces trépidations ne puissent éjecter de la réglette les pièces ou leur faire perdre leur orientation initiale, des moyens à type de toit et de guide sont mis en oeuvre pour limiter en hauteur les trépidations des pièces et guider ces pièces en les soutenant. Ces moyens sont réglables pour permettre une adaptation au type de pièce que l'on souhaite convoyer/distribuer.

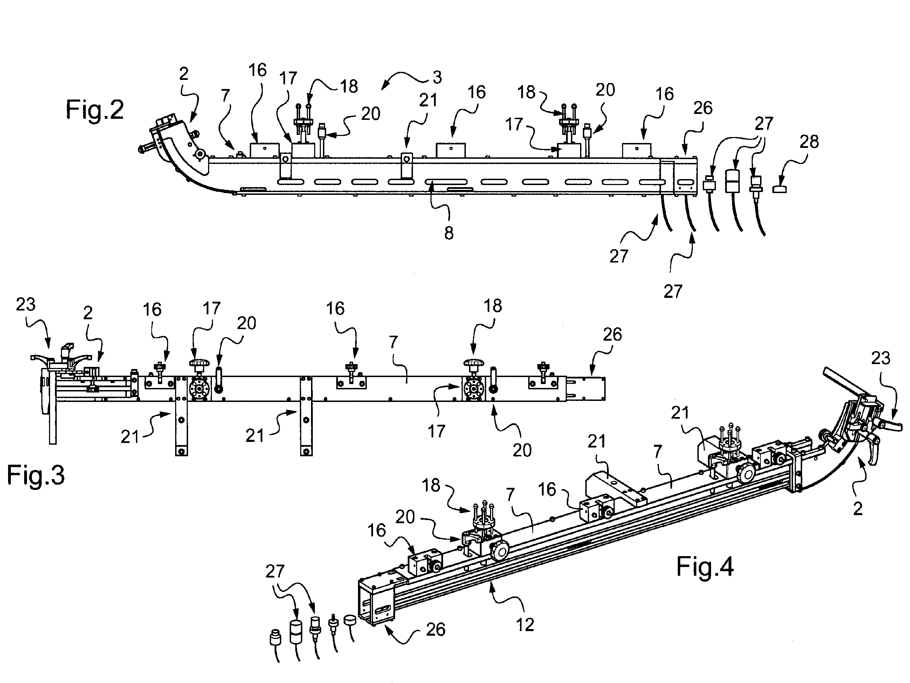

Sur les Figures 2, 3, 4, 7 qui sont diverses vues d'une réglette, on a retiré la paroi latérale amovible de la réglette. De ces vues, on peut comprendre que la réglette a une forme générale de tube creux allongé à section sensiblement rectangulaire. Les pièces circulent à l'intérieur de la réglette bien que, selon le type de pièce considéré, certaines parties de celles-ci puissent dépasser vers le bas de la réglette, sous la réglette, notamment les parties inférieures des tigelles/tubes d'aspiration dans le cas de pompes.

La réglette 3 est constituée d'un couvercle 7 horizontal sur un premier coté latéral duquel est fixée vers le bas, à demeure, une paroi latérale fixe 8 verticale et sur un second coté latéral, une paroi latérale amovible 9 verticale. Une lame 12 horizontale est fixée vers le bas de la paroi latérale fixe 8. Une lame 13 horizontale est fixée vers le bas de la paroi latérale amovible 9. Les qualificatif horizontal et vertical sont utilisés à des fins de simplification de la description des rapports entre les éléments et concernent une disposition horizontale de la réglette.

Les lames 12 et 13 forment un guide permettant de soutenir les pièces lors de leur déplacement dans la réglette. Les lames sont parallèles entre elles et leur écartement peut être modifié en changeant la paroi latérale amovible 9 pour une autre dont la largeur de lame est différente. Il est ainsi possible d'avoir une ouverture entre les deux lames 12, 13 plus ou moins importante, voir nulle ou quasi nulle. On comprend que l'on prendra pour la réglette une paroi latérale amovible qui laisse une ouverture dans le cas d'une pièce qui est une pompe 27 dont la tigelle/tube d'aspiration doit pendre hors de la réglette, une partie élargie haute de ladite pompe 27 étant soutenue par les lames du guide et la tigelle/tube d'aspiration passant entre les lames dans l'ouverture.

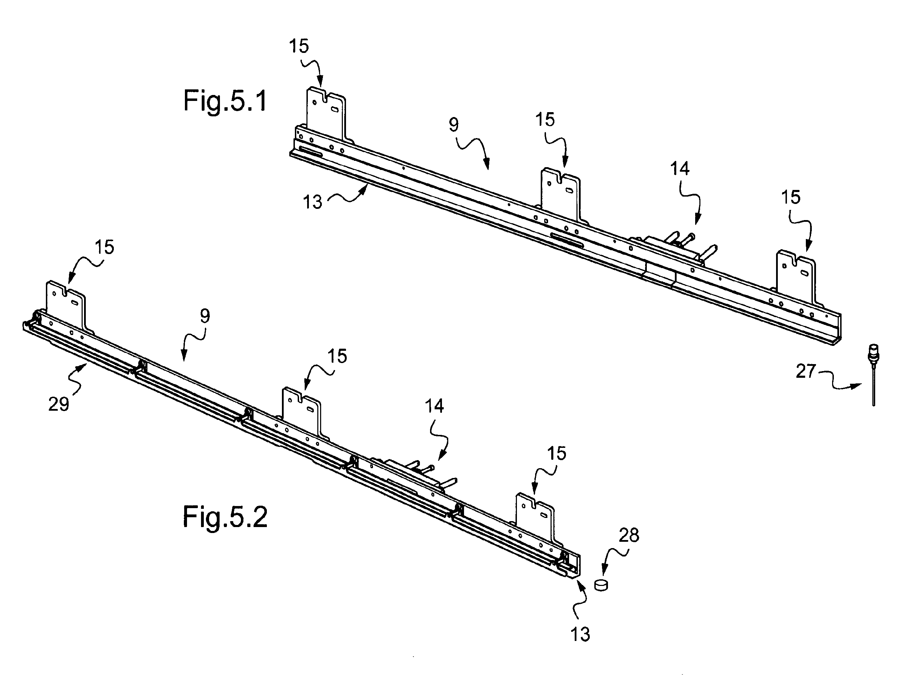

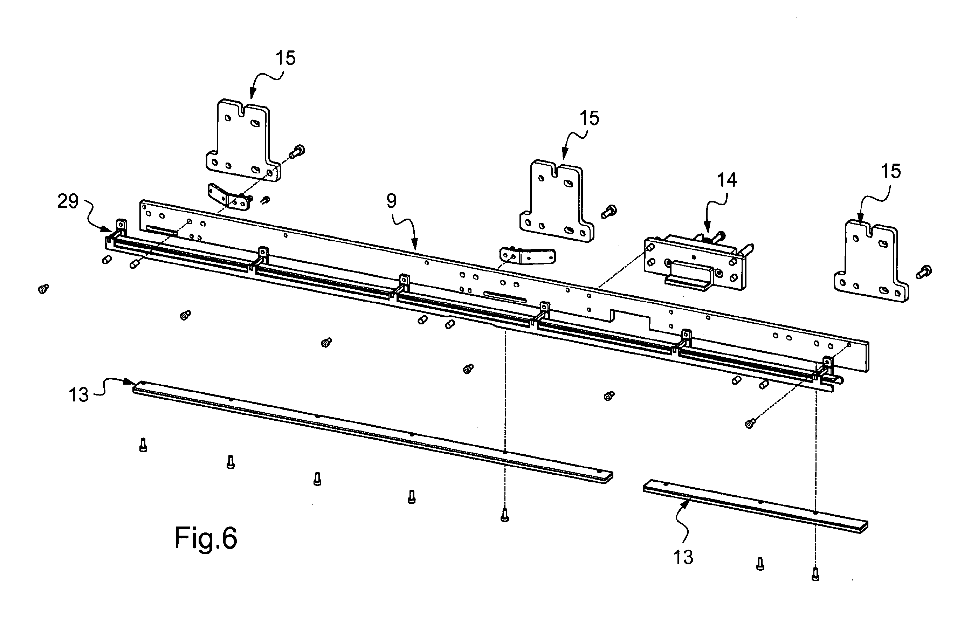

La paroi latérale amovible 9, visible isolément sur les Figures 5.1, 5.2 et 6, est fixée d'une manière amovible par des moyens de fixation 16 du couvercle 7 dans lesquels des pattes 15 viennent en prise. Des picots de positionnement détrompeurs viennent dans des orifices correspondants entre les moyens de fixation 16 et les pattes 15 afin de faciliter le montage de la paroi latérale amovible à la réglette.

La réglette est fixée aux bras 4 par l'intermédiaire de blocs de raccord 21 fixés sur le couvercle.

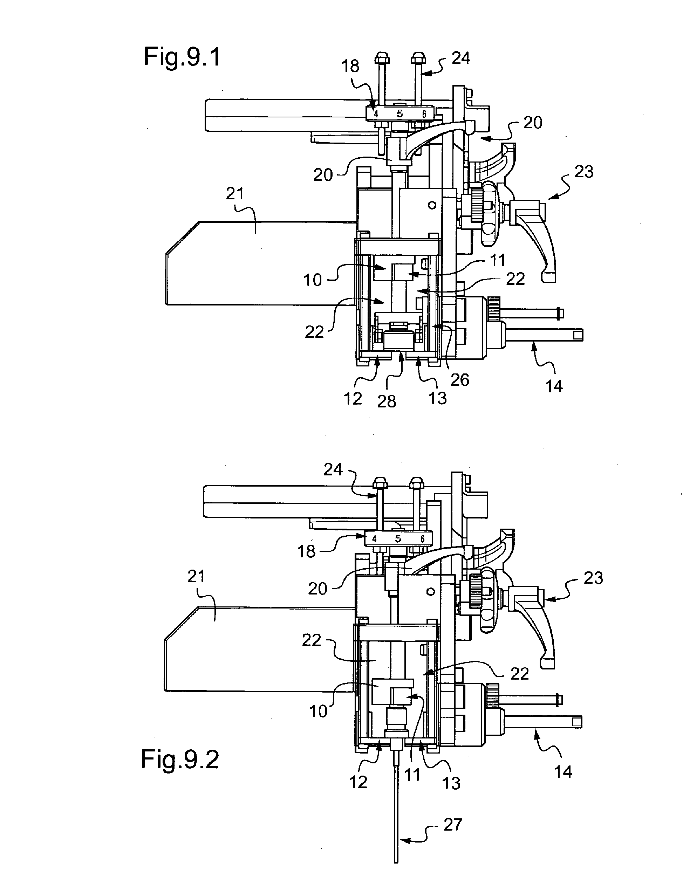

Le toit est formé de deux parties allongées 10 et 11 qui peuvent s'écarter entre elles afin de pouvoir créer un canal ouvert vers le haut en bas de ce toit. Sur la Figure 9.4, les deux parties 10 et 11 sont écartées pour former un tel canal. De préférence, on referme le canal (absence de canal sur les Figures 9.1, 9.2 et 9.3) pour des pièces qui n'ont pas de partie d'extrémité supérieure rétrécie par rapport à une partie plus basse élargie reposant sur le guide. Par contre, pour des pièces avec une extrémité supérieure rétrécie, par exemple une pompe sans poussoir de tête/bouton poussoir/bouton diffuseur donc avec un « stem » ou tube de refoulement pointant vers le haut, le canal est ouvert et le « stem »/tube de refoulement peut y circuler (voir la Figure 9.4). La partie 10, la plus volumineuse, en forme de L couché, reçoit d'une manière coulissante la partie 11 du toit. La largeur du canal est réglable grâce à des poignées 20 qui permettent aussi de bloquer les deux parties 10 et 11 entre elles. Les poignées 20 sont accessibles au dessus de la réglette et elles traversent le couvercle 7 dans des trous oblongs.

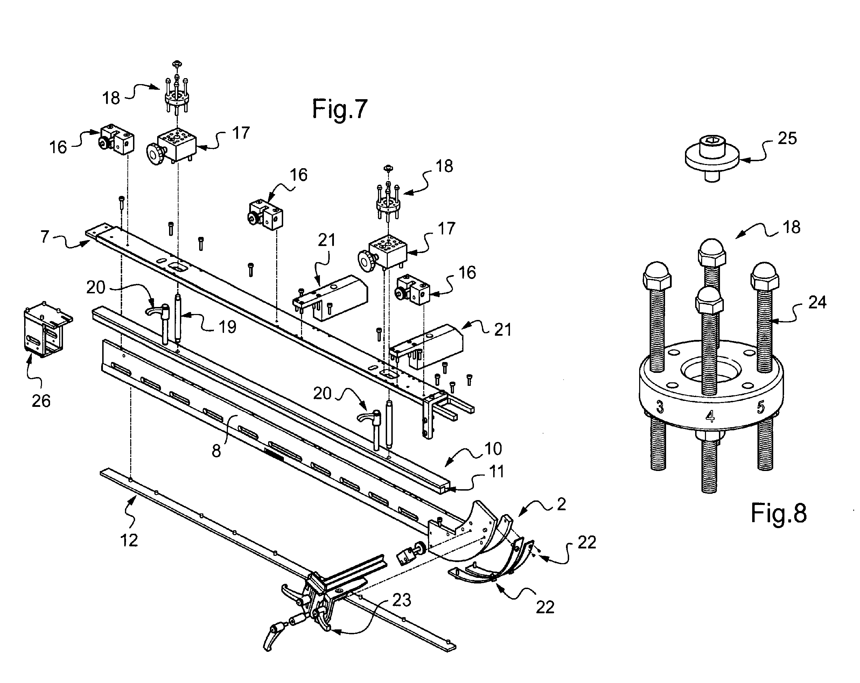

Le toit sert de butée pour limiter les trépidations des pièces dans la réglette et il est rendu ajustable en hauteur au sein de la réglette pour adaptation à des formes et tailles de pièces différentes. Dans l'exemple représenté, l'ajustement est indexé et autorise un choix entre plusieurs hauteurs prédéfinies. A cette fin, un bloc indexeur 17 est fixé sur le couvercle 7 et un barillet 18 peut y être placé à des hauteurs différentes en fonction du moyen d'indexation choisi qui est une came de hauteur déterminée parmi d'autres cames. Comme mieux visible Figure 8, les cames sont des tiges filetées 24 pouvant être vissées ou dévissées à travers le barillet 18 pour réglage en hauteur du toit. Un axe 19 vertical solidaire à son extrémité inférieure à la partie 10 du toit est supporté par le barillet 18 grâce à une rondelle 25 fixée à la partie supérieure de l'axe 19. L'axe 19 traverse librement le bloc indexeur 17 et le couvercle 7 par des orifices en correspondance.

Typiquement, lorsque l'on souhaite convoyer des pompes sans poussoir de tête/bouton poussoir/bouton diffuseur sur le dessus, c'est-à-dire une pièce comportant une partie intermédiaire élargie se poursuivant vers le bas par une tigelle/tube d'aspiration et par le haut par un « stem »/tube de refoulement, on utilise un guide à ouverture et un toit dont le canal est ouvert. Par contre, si la pompe comporte un poussoir de tête/bouton poussoir/bouton diffuseur sur le dessus, de préférence on referme le canal du toit. Dans le cas d'un bouchon à convoyer, il n'y a pas en général de partie amincie dépassant vers le haut et vers le bas et on peut alors utiliser un guide 12, 13 sans ouverture et un toit à canal refermé.

On rappelle que la mise en oeuvre d'un type de guide à ouverture fermée ou ouverte se fait par changement de la paroi latérale amovible 9 et il existe plusieurs types de parois latérales amovibles ayant chacune une largeur de lame de guide différente. Ainsi, sur la Figure 5.1, la paroi latérale amovible 9 est plus particulièrement adaptée au convoyage de pompes 27 et laisse une ouverture entre les deux lames 12 et 13 pour que la tigelle/tube d'aspiration de la pompe puisse pendre à travers cette ouverture (voir Figure 9.2).

Par contre, la paroi latérale amovible 9 des Figure 5.2 et 6 est plus particulièrement adaptée au convoyage de bouchons 28. Dans cet exemple, la largeur de la lame 13 est telle qu'il reste une ouverture entre les deux lames 12 et 13 (voir Figure 9.1), l'ouverture étant moins large que le bouchon afin que les lames puissent le supporter. Dans une variante, la largeur de la lame 13 est telle que l'ouverture entre les deux lames 12 et 13 est quasiment fermée. Dans l'exemple représenté Figure 9.1, la largeur des bouchons convoyés est relativement petite par rapport à la largeur entre les deux parois latérales 8, 9 de la réglette, d'où un risque de passage de front de deux bouchons ou de coincement, et on a donc mis en oeuvre en outre, fixé sur la paroi latérale amovible, un chemin de guidage 29 en forme de U inversé comme aussi visible sur les Figures 5.2 et 6. Ce chemin de guidage 29 permet le maintien latéral des bouchons. Dans d'autres variantes de réalisation de la paroi latérale amovible 9, notamment parce que les bouchons sont plus larges, le chemin de guidage 29 est omis. Dans d'autres variantes de réalisation de la paroi latérale amovible 9 où le chemin de guidage 29 est omis, c'est le toit avec ses deux parties allongées 10 et 11 écartées pour ouverture du canal de toit et descendues qui permet le guidage des bouchons par maintien latéral des bouchons dans ledit canal de toit.

Sur la Figure 9.3, la paroi latérale amovible a été retirée et on ne voit donc plus la trappe de vidange 14. A noter que des lames 12 et 13 restent visibles sur toutes les Figures 9.1, 9.2, 9.3 et 9.4 car elles appartiennent à l'embout 26 prolongeant la réglette coté aval et par lequel coté la réglette est vue sur ces quatre Figures. On comprend que si l'embout avait été supprimé sur ces quatre Figures, la lame 13 de la réglette ne serait pas présente sur la Figure 9.3 puisque la paroi latérale amovible sur laquelle elle est fixée y a été retirée.

On comprend donc que grâce à la mise en oeuvre d'une paroi latérale amovible et d'un toit réglable en écartement de canal et réglable en hauteur, il est possible d'adapter simplement et rapidement la réglette à pratiquement tout type de pièce à convoyer et, ceci, même avec un nombre limité de types de parois latérales amovibles. Il en résulte que la réglette est multiformat.

La réglette représentée comporte une trappe de vidange 14 et, de préférence, cette trappe de vidange est du coté de la paroi latérale amovible 9 et elle permet de retirer un segment de la lame 13 pour faire tomber les pièces sous la réglette. Dans une variante, la trappe de vidange est du coté de la paroi latérale fixe 8. Cette trappe de vidange correspond à un segment de lame qui est amovible, de préférence par translation latérale. De préférence, comme représenté Figure 1, un bac de récupération 30 des pièces tombées est disposé sous ladite trappe.

La réglette comporte à son extrémité amont une crosse 2 dont certains éléments sont intégrés à la réglette. Cette crosse 2 comporte notamment des lames courbes 22 en correspondance avec les lames 12 et 13 du guide et comporte un moyen de réglage 23. Ces lames courbes 22 sont en particulier visibles au fond de la réglette sur les Figres 9.1, 9.2, 9.3 et 9.4. Dans une variante de réalisation, la réglette comporte un moyen amont de récupération des pièces autre qu'une crosse et, par exemple, une vrille.

## Revendications

1. Réglette (3) multiformat vibrante pour convoyage et distribution de pièces orientées pour flacons, lesdites pièces étant guidées et maintenues dans une orientation prédéfinie entre deux parois latérales (8) (9) dans la réglette par au moins un guide (12, 13) et un toit (10, 11) de ladite réglette, le guide étant formé de deux lames parallèles allongées dans le sens de la longueur de la réglette, chacune des lames étant solidaire d'une paroi latérale correspondante, le guide soutenant les pièces et le toit formant une limite vers le haut aux déplacements des pièces, le guide et le toit étant parallèles entre eux et la distance entre le guide et le toit est réglable par un moyen de réglage (17, 18, 19) de hauteur de toit, une des parois latérales étant amovible et interchangeable (9) pour permettre une adaptation du guide en fonction du type de pièce,
**caractérisé en ce que** l'autre des parois latérales est une paroi latérale fixe (8), la paroi latérale fixe étant fixée à un couvercle (7) fermant vers le haut la réglette, les moyens de réglage de hauteur (17, 18, 19) de toit étant (10, 11) fixés sur le couvercle (7), des moyens de fixation amovible (16) à la paroi latérale amovible étant installés sur ledit couvercle (7).

2. Réglette selon la revendication 1, **caractérisée en ce que** dans un premier type de guide, la largeur de la lame (13) de la paroi amovible (9) est telle que le guide est formé de deux lames parallèles séparées par une ouverture.

3. Réglette selon la revendication 1, **caractérisée en ce que** dans un second type de guide, la largeur de la lame (13) de la paroi amovible (9) est telle que le guide est formé de deux lames parallèles accolées entre elles.

4. Réglette selon l'une des revendications 1, 2 ou 3, **caractérisée en ce que** le toit comporte deux parties (10, 11) allongées sur la longueur de la réglette, parallèles entre elles, et pouvant être accolées ou séparées entre elles afin de former respectivement un toit continu ou un toit comportant un canal ouvert vers le haut en bas du toit et allongé sur la longueur dudit toit.

5. Réglette selon la revendication 4, **caractérisée en ce que** la réglette comporte un moyen de réglage (20) en ouverture et fermeture du canal du toit.

6. Réglette selon l'une quelconque des revendications précédentes, **caractérisée en ce que** la réglette comporte une trappe de vidange (14), ladite trappe comportant une partie amovible du guide.

7. Réglette selon la revendication 6, **caractérisée en ce que** la partie amovible du guide est un segment amovible de lame (13) du coté de la paroi latérale qui est amovible.

8. Réglette selon l'une quelconque des revendications précédentes, **caractérisée en ce qu'**elle est supportée en hauteur par au moins un bras (4), ledit bras étant vibrant, et qu'elle comporte à son extrémité amont, coté arrivée des pièces, un moyen de fixation à une crosse (2) de récupération et redressement des pièces.

9. Réglette selon l'une quelconque des revendications 4 et 5, **caractérisée en ce que** le moyen de réglage (20) en ouverture et fermeture du canal du toit est (10, 11) fixé sur le couvercle (7).

10. Réglette selon l'une quelconque des revendications précédentes, **caractérisée en ce qu'**elle comporte en outre coté extrémité aval, un embout destiné à prolonger le convoyage et la distribution des pièces orientées vers l'aval.

11. Installation de distribution de pièces orientées **caractérisée en ce qu'**elle comporte d'amont vers l'aval selon le sens de circulation des pièces, un bol vibrant (1) à sortie droite, un moyen de récupération et redressement des pièces et la réglette (3) de l'une quelconque des revendications précédentes, le moyen de récupération et redressement des pièces étant fixé à une extrémité amont de la réglette et étant disposé en sortie dudit bol vibrant.

## Patentansprüche

1. Schwingende Multi-Formatleiste (3) zum Fördern und Verteilen von ausgerichteten Teilen für Fläschchen, wobei die Teile mit einer vorgegebenen Ausrichtung zwischen zwei Seitenwänden (8, 9) in der Leiste von wenigstens einem Führungselement (12, 13) und einem Dach (10, 11) geführt und gehalten werden, wobei das Führungselement von zwei parallelen, sich in der Längsrichtung der Leiste erstreckenden länglichen Platten gebildet ist, wobei jede der Platten mit einer entsprechenden Seitenwand verbunden ist, wobei das Führungselement die Teile hält und das Dach eine obere Begrenzung für die Bewegung der Teile darstellt, wobei das Führungselement und das Dach zueinander parallel sind und der Abstand zwischen dem Führungselement und dem Dach durch ein Mittel zum Einstellen der Höhe des Dachs (17, 18, 19) einstellbar ist, wobei eine der Seitenwände (9) abnehmbar und austauschbar ist, um eine Anpassung des Führungselements in Abhängigkeit vom Typ der Teile zu ermöglichen,
**dadurch gekennzeichnet, dass** die andere der Seitenwände eine feste Seitenwand (8) ist, wobei die feste Seitenwand an einem die Leiste nach oben abschliessenden Deckel (7) befestigt ist, wobei die Mittel (17, 18, 19) zum Einstellen der Höhe des Dachs (10, 11) auf dem Deckel (7) befestigt sind, wobei abnehmbare Mittel (16) zum Befestigen an der abnehmbaren Seitenwand an dem Deckel (7) angebracht sind.

2. Leiste gemäss Anspruch 1, **dadurch gekennzeichnet, dass** bei einem ersten Typ von Führungselement die Breite der Platte (13) der abnehmbaren Wand (9) so gewählt ist, dass das Führungselement von zwei parallelen, durch eine Öffnung getrennte Platten gebildet ist.

3. Leiste gemäss Anspruch 1, **dadurch gekennzeichnet, dass** bei einem zweiten Typ von Führungselement die Breite der Platte (13) der abnehmbaren Wand (9) so gewählt ist, dass das Führungselement von zwei parallelen aneinanderliegenden Platten gebildet ist.

4. Leiste gemäss einem der Ansprüche 1, 2 oder 3, **dadurch gekennzeichnet, dass** das Dach zwei sich in der Längsrichtung der Leiste erstreckende Teile (10, 11) aufweist, die zueinander parallel sind und aneinander liegen oder voneinander getrennt sein können, um entweder ein durchgehendes Dach oder ein Dach mit einem nach oben offenen Kanal, der unten am Dach und in Längsrichtung des Dachs verläuft, zu bilden.

5. Leiste gemäss Anspruch 4, **dadurch gekennzeichnet, dass** die Leiste ein Einstellmittel (20) zum Öffnen und Schliessen des Kanals des Dachs aufweist.

6. Leiste gemäss einem der vorangehenden Ansprüche, **dadurch gekennzeichnet, dass** die Leiste eine Entleerungsklappe (14) aufweist, die einen abnehmbaren Teil des Führungselements aufweist.

7. Leiste gemäss Anspruch 6, **dadurch gekennzeichnet, dass** der abnehmbare Teil des Führungselements ein abnehmbarer Abschnitt der Platte (13) auf der Seite der abnehmbaren Seitenwand ist.

8. Leiste gemäss einem der vorangehenden Ansprüche, **dadurch gekennzeichnet, dass** sie in der Höhe von wenigstens einem Arm (4) getragen ist, wobei der Arm schwingt, und dass sie an ihrem flussaufwärtigen Ende, an dem Ende, an dem die Teile ankommen, ein Mittel zum Befestigen an einem Bogen (2) zum Auffangen und Aufrichten der Teile aufweist.

9. Leiste gemäss einem der Ansprüche 4 und 5, **dadurch gekennzeichnet, dass** das Einstellmittel (20) zum Öffnen und Schliessen des Kanals des Dachs (10, 11) am Deckel (7) befestigt ist.

10. Leiste gemäss einem der vorangehenden Ansprüche, **dadurch gekennzeichnet, dass** sie ausserdem am flussabwärtigen Ende einen Ansatz aufweist, der dazu bestimmt ist, das Fördern und Verteilen der flussabwärts ausgerichteten Teile zu verlängern.

11. Anlage zum Verteilen von ausgerichteten Teilen, **dadurch gekennzeichnet, dass** sie, in der Richtung des Flusses der Teile gesehen, von flussaufwärts nach flussabwärts einen Schwingförderer (1) mit geradem Ausgang, ein Mittel zum Auffangen und Aufrichten der Teile und die Leiste (3) nach einem der vorangehenden Ansprüche aufweist, wobei das Mittel zum Auffangen und Aufrichten der Teile an einem flussaufwärtigen Ende der Leiste befestigt ist und am Ausgang des Schwingförderers angeordnet ist.

## Claims

1. A vibratory multi-format rail-strip (3) for conveying and distributing oriented parts for vials, said parts being guided and maintained in a predefined orientation between two lateral walls (8) (9) in the rail-strip by at least one guide (12, 13) and a roof (10, 11) of said rail-strip, the guide being formed of two parallel blades elongated in the direction of the rail-strip length, each of the blades being integral with a corresponding lateral wall, the guide supporting the parts and the roof forming an upward limit for the part displacements, the guide and the roof being parallel to each other and the distance between the guide and the roof being adjustable by a roof height adjustment means (17, 18, 19), one of the lateral walls being removable and interchangeable (9) to allow an adaptation of the guide as a function of the type of part,
**characterized in that** the other one of the lateral walls is a fixed lateral wall (8), the fixed lateral wall being fixed to a cover (7) upwardly closing the rail-strip, the roof height adjustment means (17, 18, 19) being (10, 11) fixed on the cover (7), means (16) for the removable fixation to the removable lateral wall being installed on said cover (7).

2. The rail-strip according to claim 1, **characterized in that**, in a first type of guide, the width of the blade (13) of the removable wall (9) is such that the guide is formed of two parallel blades separated by an opening.

3. The rail-strip according to claim 1, **characterized in that**, in a second type of guide, the width of the blade (13) of the removable wall (9) is such that the guide is formed of two parallel blades placed side by side.

4. The rail-strip according to one of claims 1, 2 or 3, **characterized in that** the roof includes two parts (10, 11) elongated over the rail-strip length, parallel to each other, and able to be placed side by side or separated from each other so as to form respectively a continuous roof or a roof including an upwardly open channel at the bottom of the roof and elongated over the length of said roof.

5. The rail-strip according to claim 4, **characterized in that** the rail-strip includes a means (20) for controlling the opening and closing of the roof channel.

6. The rail-strip according to any one of the preceding claims, **characterized in that** the rail-strip includes a discharge trap (14), said trap including a removable part of the guide.

7. The rail-strip according to claim 6, **characterized in that** the removable part of the guide is a removable segment of blade (13) on the side of the lateral wall that is removable.

8. The rail-strip according to any one of the preceding claims, **characterized in that** it is supported in height by at least one arm (4), said arm being vibratory, and **in that** it includes at it upstream end, on part arrival side, a means (2) for the fixation to a part collection and straightening crosshead (2).

9. The rail-strip according to any one of claims 4 and 5, **characterized in that** the means (20) for controlling the opening and closing of the roof channel is (10, 11) fixed on the cover (7).

10. The rail-strip according to any one of the preceding claims, **characterized in that** it further includes on the downstream end side, an end intended to extend the downstream conveying and distribution of the oriented parts.

11. An oriented part distribution installation, **characterized in that** it includes from the upstream to the downstream according to the direction of circulation of the parts, a straight-outlet vibratory bowl (1), a part collection and straightening means and the rail-strip (3) of any one of the preceding claims, the part collection and straightening means being fixed to an upstream end of the rail-strip and being arranged at the outlet of said vibratory bowl.
